(19) Europäisches Patentamt
European Patent Office
Office européen des brevets

(11) **EP 1 860 513 B1**

(12) **EUROPÄISCHE PATENTSCHRIFT**

(45) Veröffentlichungstag und Bekanntmachung des Hinweises auf die Patenterteilung:
**30.06.2010  Patentblatt 2010/26**

(51) Int Cl.:
***G05B 19/042*** *(2006.01)*

(21) Anmeldenummer: **07010109.2**

(22) Anmeldetag: **22.05.2007**

(54) **Schaltung zur sicheren Übermittlung eines analogen Signalwertes**

Connection for secure transmission of an analogue signal value

Circuit destiné à la transmission sécurisée d'une valeur de signal analogique

(84) Benannte Vertragsstaaten:
**DE**

(30) Priorität: **24.05.2006   DE 102006024311**

(43) Veröffentlichungstag der Anmeldung:
**28.11.2007   Patentblatt 2007/48**

(73) Patentinhaber: **Berthold Technologies GmbH & Co. KG**
**75323 Bad Wildbad (DE)**

(72) Erfinder:
• **Freiburger, Ewald**
**Neulingen, 75245 (DE)**

• **Briggmann, Jürgen**
**Stuttgart, 70195 (DE)**

(74) Vertreter: **Frank, Gerhard**
**Patentanwälte,**
**Mayer Frank Schön,**
**Schwarzwaldstrasse 1A**
**75173 Pforzheim (DE)**

(56) Entgegenhaltungen:
**EP-A- 1 122 625     WO-A-2005/104056**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Technischer Hintergrund

Die Erfindung betrifft eine elektronische Schaltung zur sicheren Übermittlung eines analogen elektrischen Signalwertes (im folgenden kurz mit Signal bezeichnet) zwischen zwei oder mehreren miteinander in Verbindung stehenden Systemen. Bei dem Signal kann es sich zum Beispiel um die Repräsentation einer physikalischen Größe (wie z.B. Druck, Temperatur, Helligkeit, Leitfähigkeit, usw.) oder einer technischen Größe (wie z. B. Füllstand, Durchfluss, Soll- oder Istwerte einer Stellgröße oder Regelschleife, usw.) handeln. Die Umwandlung der physikalischen bzw. technischen Größe (im folgenden kurz als Größe bezeichnet) in ein diese repräsentierendes Signal erfolgt durch Sensor- oder Detektorsysteme (im folgenden kurz Transmitter genannt) vor Ort an der Stelle ("im Feld"), an der die Größe zu erfassen bzw. zu ermitteln ist (man spricht daher oft auch von Feldgeräten bzw. Feldtransmittern). Das so ermittelte Signal wird dann anderen, zum Teil auch weit entfernten Systemen (Anzeigen, Reglersysteme, Steuerungen, Motoren, Ventile, usw.; im folgenden kurz Auswertesysteme genannt) zur Weiterverarbeitung zur Verfügung gestellt.

EP 11 22 625 beschreibt ein System zur sicheren Übermittlung von technischen grössen.

An die Leistungsfähigkeit und Betriebssicherheit solcher Systeme werden vielfältige Anforderungen gestellt, die z.T. auch in Normierungen ihren Niederschlag gefunden haben. Diese Anforderungen werden im folgenden kurz skizziert:

Stromsignal nach NAMUR:

Ein in der Industrie weit verbreiteter Standard zur Übermittlung von Signalen physikalischer bzw. technischer Größen ist eine elektrische Stromschleife nach den NAMUR-Empfehlungen NE006 (bzw. DIN IEC 60381 Teil 1) und NE043 (die NAMUR ist ein internationaler Verband der Anwender von Automatisierungstechnik der Prozessindustrie). Hierbei repräsentiert ein in einer Stromschleife fliessender elektrischer Schleifenstrom zwischen 4 mA und 20 mA den Wert der physikalischen oder technischen Größe. Aufgrund von Driften und Ungenauigkeiten sowie der Erkennung von Bereichsüberläufen wird für die Repräsentation der Größen ein etwas größerer Strombereich zugelassen: 3,8...20,5 mA. Ströme die kleiner als 3,6 mA bzw. größer als 21 mA sind sollten die Auswerteeinheiten nicht mehr als Repräsentation der physikalischen oder technischen Größe sondern als Fehlerinformation des Sensors interpretieren. Ein Schleifenstrom kleiner als 3,6 mA oder grösser als 21 mA wird daher im folgenden kurz als Fehlerstrom bezeichnet.

Feldgeräte , die nur einen Strombedarf von weniger als 3,6mA haben, werden dabei oft aus der Stromschleife selbst mit Energie versorgt. Man spricht dann von sogenannten 2Leiter-Geräten, da zum Anschluss der Geräte lediglich eine Leitung mit 2 Adern erforderlich ist. Die zugehörige Gegenstelle (Auswertesystem) muss in diesem Fall eine geeignete Spannungsversorgung zur Speisung der Stromschleife zur Verfügung stellen. Das Feldgerät arbeitet in diesem Fall als passive Stromsenke.

Feldgeräte mit höherem Stromverbrauch müssen mit einer zusätzlichen Hilfsenergie versorgt werden (3Leiter- oder 4Leiter-Geräte). Neben der Betriebsart Stromsenke (wie bei den 2Leiter-Geräten) können diese aber auch als aktive Stromquelle arbeiten. Die Spannungsversorgung der Stromschleife ist dann im Feldgerät selbst untergebracht. Der Vorteil dabei ist, dass die Anschaltung an die Auswertesysteme einfacher ausfallen kann (keine Spannungsversorgung mehr erforderlich).

HART-Protokoll:

Ein reines analoges elektrisches Stromsignal kann immer nur zur Übertragung einer Größe in eine Richtung (z. B. vom Transmitter zum Auswertegerät) verwendet werden. In vielen Fällen ist es jedoch erwünscht, noch weitere zusätzliche Informationen zu übertragen, wobei der Informationsfluss der zusätzlichen Informationen in beide Richtungen möglich sein sollte. Solche zusätzlichen Informationen sind z.B. Informationen über Revisionsstände des Sensors, interne Zustände des Sensors (wie Temperatur, Betriebsspannung, etc.), Kalibrier- und Parametrierinformationen des Sensors, usw.. Ein weit verbreitetes Verfahren zur Übertragung solcher zusätzlichen Informationen ist die Überlagerung von digitalen elektrischen Informationen über das eigentliche analoge elektrische Signal mit einem FSK-Verfahren (FSK = Frequency Shift Keying, Bell-Standard 202). Dem niederfrequenten (quasistationären) Stromsignal mit einer oberen 3dB-Grenzfrequenz von 25Hz wird dazu ein höherfrequentes Signal überlagert, das zwischen den Frequenzen 1200 Hz (Repräsentation einer "0") und 2200 Hz (Repräsentation einer "1") umgetastet werden kann. Der Mittelwert des niederfrequenten analogen Stromsignals bleibt dabei unverändert. Damit Feldgeräte und Auswertesysteme verschiedener Hersteller diese zusätzlichen Informationen untereinander austauschen können wurde ein einheitliches Protokoll für den Informationsaustausch definiert: das HART-Protokoll (HART= Highway Addressable Remote Transducer), das von der HCF (=HART Communication Foundation) als offenes Protokoll verwaltet wird und in dem auch bestimmte Mindestanforderungen an die (Hardware-) Qualität der Signale festgeschrieben werden.

Explosionsschutz durch Eigensicherheit:

Insbesondere in der Prozessindustrie müssen physikalische oder technische Größen oftmals in Bereichen gemessen bzw. ermittelt werden, in denen potentiell Explosionsgefahr besteht. Durch geeignete Maßnahmen in den Feldgeräten und Auswertesystemen (wie z. B. Spannungs- und Strombegrenzung) kann die elektrische Energie in dem zu übermittelnden Signal so begrenzt werden, dass dieses Signal unter keinen Umständen (Kurzschluss, Unterbrechungen, thermische Effekte, ...) eine Explosion auslösen kann. Man spricht in diesem Fall von eigensicheren Signalen nach DIN EN 50020 bzw. IEC 60079-11.

Funktionale Sicherheit:

In vielen Fällen kann die Größe des übermittelten Signals einen erheblichen Einfluss auf sicherheitsrelevante Entscheidungen haben (z. B. Temperatur, Druck oder Füllstand in einem zu regelnden chemischen Prozess mit hochgiftigen, explosiven oder anderweitig gefährlichen Ausgangs- bzw. Endprodukten). In diesen Fällen ist es für den sicheren Ablauf des Prozesses entscheidend, dass das übermittelte Signal tatsächlich der gemessenen Größe entspricht. Geräte und Systeme in sicherheitsrelevanten Anwendungen müssen daher besonderen Anforderungen genügen, die u. a. in den Normenreihen zur Funktionalen Sicherheit (DIN EN 61508 und DIN IEC 61511) beschrieben und festgelegt werden. Zentraler Bestandteil dieser Normen ist die Einordnung von Geräten und Systemen in sogenannte Safety Integrity Level (=SIL, Sicherheitsintegritätslevel). Je nach der Größe der von einer Anlage oder einem System ausgehenden Gefahr, müssen die dort eingesetzten Geräte und Systeme einem SIL von 1 (geringe Gefahr) bis 4 (höchste Gefahr) zugeordnet werden. Direkt mit den SIL verknüpft sind Grenzwerte für die Ausfallraten und die Zuverlässigkeit der in solchen Anlagen zum Einsatz kommenden Geräte.

Da Auswertesysteme (Leitsysteme, Steuerungen, etc.) nur die übermittelten Signale, nicht jedoch die zugehörigen zu messenden Größen kennen, sind diese in sicherheitsrelevanten Anwendungen auf eine sehr hohe Zuverlässigkeit der Signale angewiesen oder es müssen zusätzliche Signale zur Bestimmung der Korrektheit herangezogen werden. Oftmals werden in solchen Fällen die zu messenden Größen redundant erfasst und übertragen (zwei oder mehr Transmitter mit jeweils eigenen Signalen). Die Auswertesysteme können dann durch Vergleich der übermittelten Signale (z.B. auf Übereinstimmung innerhalb vorgegebener Grenzen) auf die Korrektheit der Signale schließen. Von Nachteil ist hierbei der erhebliche zusätzliche materielle Aufwand (mehrere Transmitter, mehrere Signalleitungen, Vergleichseinrichtungen,...) sowie die Zunahme der Komplexität der Auswertung (z.B.: um wie viel dürfen die Signale voneinander abweichen, damit diese noch als gleich angesehen werden können?).

Das einzige Gerät in einer Stromschleife, das die Übereinstimmung des in der Stromschleife fließenden Stroms mit der zu repräsentierenden physikalischen bzw. technischen Größe feststellen kann, ist der Transmitter selbst, da nur diesem beide Werte bekannt sind. Es ist daher von Vorteil, wenn ein Transmitter die Übereinstimmung des Stromsignals mit der zu repräsentierenden Größe mit einer ausreichend hohen Wahrscheinlichkeit feststellen kann und gegebenenfalls bei einer Abweichung das Stromsignal sicher in einen der beiden Fehlerzustände (<3,6mA oder >21 mA, nach NAMUR) bringen kann.

Stand der Technik

Aus der WO 2005/052881 A2 ist eine Überwachungseinrichtung bekannt, mit der die erläuterten Anforderungen zum Teil erfüllt werden können. Ein Nachteil bei dieser Lösung ist jedoch darin zu sehen, dass der dort vorgesehene Messwiderstand selbst nicht auf Fehler überwacht wird, so dass eine Fehlfunktion dieses für die korrekte Funktion wesentlichen Bauteils nicht erkannt wird, und folglich erhöhte Anforderungen an die funktionale Sicherheit nicht erfüllt werden können.

Darstellung der Erfindung

Es ist Aufgabe der vorliegenden Erfindung, die funktionale Sicherheit eines Transmitters bzw. Auswertesystems einer gattungsgemässen Schaltung bis zumindest zur Stufe SIL2 zu erhöhen, indem sichergestellt wird, dass der in der Stromschleife fließende Strom, der dem nachfolgenden Gerät als dem Wert der Messgrösse entsprechend zur Verfügung gestellt wird, mit einer entsprechend hohen Wahrscheinlichkeit entweder dem tatsächlichen Wert der zu repräsentierenden Messgröße oder einem der von der NAMUR festgelegten Fehlerwert entspricht.

Diese Aufgabe wird mit den Merkmalen des Patentanspruchs 1 gelöst.

Ein Grundgedanke der Erfindung ist in der Aufteilung des Messwiderstandes zur Bestimmung des Wertes des Schleifenstroms in mindestens zwei einzelne Messwiderstände und dem Abgriff des Rücklesesignals zwischen diesen Einzelwiderständen zu sehen. Ändert nämlich einer der Einzelwiderstände seinen Wert (z.B. durch Bruch oder schlechte Kontaktstellen), so kann dies von der Kontrolleinheit festgestellt werden, da nun die Rücklesespannung nicht mehr zu der dem zu erzeugenden Schleifenstrom entsprechenden Vorgabespannung passt.

Von besonderem Vorteil ist, dass mit dem erfindungsgemässen Ansatz abhängig vom Einsatzzweck alternativ oder kumulativ ein wahlweiser Betrieb des Transmitters als Stromsenke oder Stromquelle erfolgen kann, und dass durch einfache konstruktive Erweiterungen die HART-Spezifikation und der Explosionsschutz durch Eigensicherheit erfüllt werden kann.

Entsprechende Ausgestaltungen sind den Unteransprüchen zu entnehmen.

## Kurze Beschreibung der Zeichnungen

Mehrere Ausführungsbeispiele der Erfindung werden anhand der Figuren 1-10 im folgenden näher erläutert. Es zeigen:

Figur 1:      Ein Blockschaltbild eines industriellen Prozessregelkreises,

Figur 2:      Ein Blockschaltbild eines Feldgerätes (Transmitter),

Figur 3:      Ein Blockschaltbild des Stromausgangs der zugrunde liegenden Erfindung

Figur 4:      schematische Darstellung der Umschaltung des 2. Stellgliedes auf einen festen Ausgangsstrom

Figur 5:      Blockschaltbild eines 3Leiter- bzw. 4Leiter Feldgerätes mit galvanischer Trennung des Stromausgangs.

Figur 6:      Blockschaltbild eines 3Leiter- bzw. 4Leiter Feldgerätes mit galvanischer Trennung des Stromausgangs und der Umschaltmöglichkeit zwischen den Betriebsmodi passive Stromsenke und aktive Stromquelle.

Figur 7:      schematische Darstellung einer Zenerbarriere.

Figur 8:      Stromausgang nach Figur 6 mit zusätzlichen Explosions-schutzmassnahmen.

Figur 9:      Stromausgang nach Figur 8 mit zusätzlicher HART-Kommunikation.

Figur 10:      Ablaufdiagramm der Fehlersignalisierung

## Beschreibung der Ausführungsbeispiele

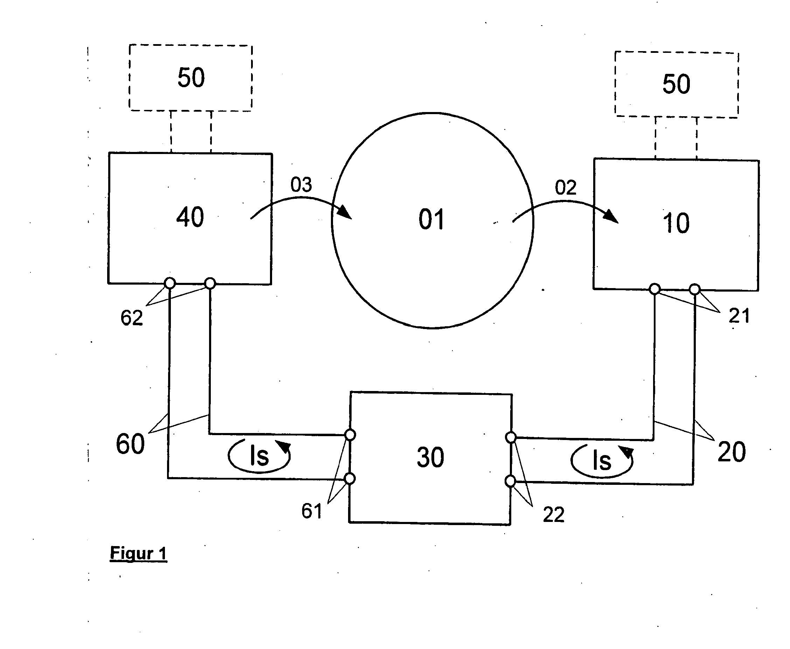

Figur 1 zeigt zunächst ein typisches Anwendungsbeispiel aus der Prozessleittechnik, bei dem physikalische und technische Größen mittels analoger elektrischer Signale zwischen verschiedenen Systemen übertragen werden. Im Beispiel muss für die Regelung eines technischen Prozesses 01 (z.B. einer chemischen Reaktion in einem Reaktor) muss das Leitsystem (oder Kontrollsystem) 30 zu jedem Zeitpunkt den Wert einer physikalischen Größe 02 (z.B. Füllstand, Temperatur, Druck, usw.) des Prozesses 01 kennen und innerhalb vorgegebenen Grenzen halten. Dazu wird die physikalische Größe 02 von einem Transmitter 10 erfasst und in ein analoges elektrisches Signal umgeformt, das als Schleifenstromsignal Is der Stromschleife 20 über die Klemmen 21 zur Verfügung gestellt wird und das vom Leitsystem 30 über die Klemmen 22 erfasst wird. Der Transmitter kann dabei zusätzlich über eine externe Stromversorgung 50 mit Hilfsenergie versorgt werden.

Über ein anderes Stromsignal Is, das das Leitsystem 30 über die Klemmen 61 einer weiteren Stromschleife 60 zur Verfügung stellt, kann das Leitsystem 30 über eine Stelleinrichtung (auch als Aktor bezeichnet) 40 (z.B. Ventil, Heizung, Rührer, usw.) auf die den Prozess beeinflussende Größe 03 (z.B. Durchfluss, Heizstrom, usw.) einwirken. Auch hier kann der Aktor über eine externe Versorgung 50 mit Hilfsenergie versorgt werden. Komplexere Anlagen können dabei durchaus deutlich mehr als eine Größe 02 über eine Vielzahl von Transmittern 10 und Stromschleifen Stromschleifen 20 erfassen und über mehrere Aktoren 40 und Stromschleifen 60 auf den Prozess Einfluss nehmen.

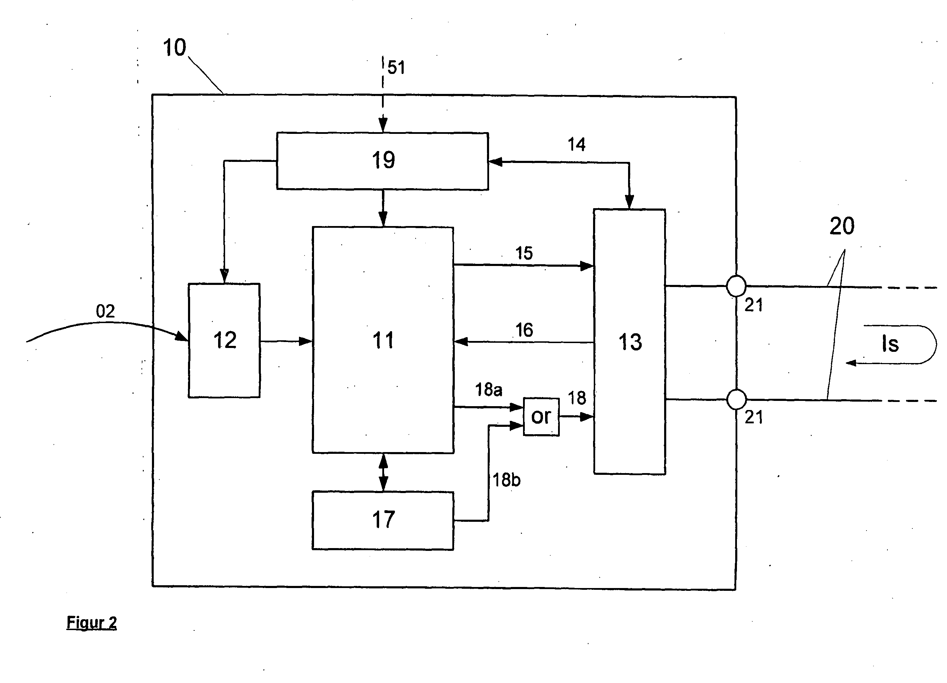

Figur 2 zeigt schematisch den typischen Aufbau eines Transmitters 10. Die Größe 02 wird von einem Sensorelement 12 erfasst, das die Größe 02 in geeigneter Weise (z.B. Wandlung in ein elektrisches Signal mit anschließender Analog-Digital-Umsetzung) einer Kontrolleinheit 11 (z.B. Mikrokontroller einschließlich Peripherie, Takterzeugung und Speicher) zur Verfügung stellt. Die Kontrolleinheit 11 ermittelt daraus und aus seinen internen Parametrierund Kalibrierwerten den Wert des Schleifenstromes Is der in der Stromschleife 20 fließen soll und teilt diesen Wert über ein geeignetes Signal 15 (z.B. über eine durch Digital-Analog-Wandlung erzeugte Steuerspannung) der Stromausgangsschaltung 13 mit. Die Stromausgangsschaltung 13 (im folgenden kurz mit Stromausgang bezeichnet) stellt dann entsprechend dem Signal 15 den Schleifenstrom Is in der Stromschleife 20 ein. Die korrekte Funktion der Kontrolleinheit 11 wird durch eine Überwachungsschaltung 17 (z.B. Watchdog) laufend überprüft. Stellt die Überwachungsschaltung 17 eine Fehlfunktion der Kontrolleinheit 11 fest, so kann sie über die Signale 18b und 18 den Stromausgang unabhängig vom Signal 15 in einen definierten Fehlerzustand bringen (z.B. Ausgabe von Is > 21 mA über die Stromschleife 20). Damit die Kontrolleinheit 11 den tatsächlichen in der Stromschleife 20 fließenden Strom Is kennt, wird dieser Wert der Krontrolleinheit 11 über ein geeignetes Signal 16 zur Verfügung gestellt. Weicht der tatsächlich in der Stromschleife 20 fließende Schleifenstrom Is von dem durch das Signal 15 vorgegebenen Wert um mehr als eine vorgegebene Fehlerschranke ab, so kann auch die Kontrolleinheit 11 über die Signale 18a und 18 den Stromausgang in den oben erwähnten definierten Fehlerzustand bringen. Die beiden Signale 18a und 18b sind dabei logisch ODER-Verknüpft, d.h. dass entweder nur eines der beiden Signale 18a oder 18b oder beide Signale aktiv sein müssen, damit das Signal 18 aktiv wird (aktiv bedeutet dabei, dass der Stromausgang 13 so geschaltet wird, dass er unabhängig vom Vorgabewert des Signals 15 einen Fehlerzustand nach NAMUR NE043 signalisiert). Nur wenn beide Signale 18a und 18b passiv sind, bleibt auch das Signal 18 passiv und der Stromausgang im normalen Betriebszustand (d.h., der Schleifenstrom Is wird durch das Signal 15 bestimmt).

Die Versorgung 19 versorgt die einzelnen Baugruppen des Transmitters 10 mit Strom. Dabei kann die Versorgungseinheit 19 ihre Energie entweder aus der Stromschleife 20 (Pfad 14 vom Stromausgang 13 zur Versorgungseinheit 19) oder aus einer externen Hilfsenergieversorgung (Pfad 51) erhalten. Im letzteren Fall kann die Versorgungseinheit 19 dem Stromausgang (Pfad 14 von der Versorgungseinheit 19 zum Stromausgang 13) auch die Energie für eine aktive Versorgung der Stromschleife 20 zur Verfügung stellen. Im ersten Fall kann der Stromausgang nur als passive Stromsenke arbeiten.

Figur 2 kann prinzipiell in gleicher Weise auch als Blockschaltbild für das Prozessleitsystem 30 (oder jedes andere Auswertesystem) verstanden werden. In diesem Fall ist das Sensorelement 12 entsprechend als eine Stromeingangsschaltung zu betrachten, die in geeigneter Weise den in einer Stromschleife fließenden Strom der Kontrolleinheit 11 zur Verfügung stellt. Statt einem Stromeingang sind auch andere Eingabemöglichkeiten denkbar (z.B. Mensch-Maschine-Schnittstellen wie Tastaturen, Einstellregler, usw.).

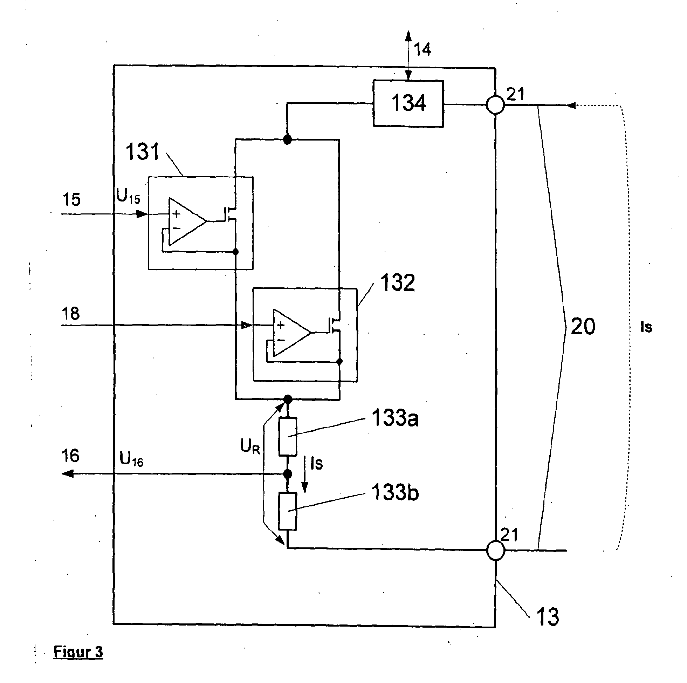

In Figur 3 wird der der Erfindung zugrunde liegende Stromausgang 13 in einer schematischen Übersicht näher dargestellt. Die Versorgungseinheit 134 dient entweder der Stromversorgung (eventuell auch nur von Teilen) des Transmitters 10 aus der Stromschleife 20 (Betriebsart als passive Stromsenke) oder stellt der Stromschleife 20 die zum Betrieb erforderliche Versorgungsspannung zur Verfügung (aktive Stromquelle).

Der Schleifenstrom Is der Stromschleife fließt über die Klemmen 21 zunächst über zwei parallel geschaltete Stellglieder 131 und 132, die beide als spannungsgesteuerte Stromsteller (bzw. Stromquellen) (U. Tietze, Ch. Schenk; "Halbleiter Schaltungstechnik"; 12. Auflage; Springer Verlag) ausgeführt sind und die beide unabhängig voneinander den Schleifenstrom Is in der Stromschleife 20 basierend auf den Steuersignalen 15 und 18 einstellen können. Dabei wird jeweils das Stellglied dominieren, das den höheren Schleifenstrom Is in der Stromschleife 20 einzustellen versucht. An den beiden Widerständen 133 (a+b) mit dem Summenwiderstandswert $R_{133}$ (im folgenden auch als Messwiderstand bezeichnet) fällt dabei eine dem Strom in der Schleife proportionale Spannung $U_R(ls) = R_{133} \times Is$ ab, die den beiden Stellgliedern als Rückführung des Istwertes dient. Im normalen Betrieb wird über das Stellglied 131 und die analoge Vorgabespannung 15 von der Kontrolleinheit 11 der Schleifenstrom Is in der Stromschleife 20 so eingestellt, dass dieser die von der Sensoreinheit 12 gemessene Größe 02 repräsentiert, sich also im Bereich von 4...20mA bzw. 3,8...20,5mA befindet. Bei von der Kontrolleinheit im Transmitter festgestellten Problemen, die eine sichere Messung der Größe 02 nicht mehr zulassen, kann über das Stellglied 131 auch ein Schleifenstrom < 3,6mA bzw. > 21 mA generiert werden und so den an die Stromschleife 20 angeschlossenen Auswertesystemen die Ungültigkeit des Messwertes mitgeteilt werden.

Damit die Kontrolleinheit 11 sicher sein kann, dass in der Stromschleife 20 tatsächlich der von ihr über das Steuersignal 15 vorgegebenen Schleifenstrom Is fließt, muss der Kontrolleinheit 11 der in der Stromschleife 20 fließende Schleifenstrom Is mitgeteilt werden. Dazu kann theoretisch die gleiche an den Widerständen 133 abfallende Spannung $U_R$ herangezogen werden, die auch den beiden Stellgliedern 131 und 132 als Istwertrückführung dient.

Dies hat jedoch den gravierenden Nachteil, dass hierbei nur die Übereinstimmung des Vorgabewertes (Signal 15) mit dem erwarteten Rücklesewert (Signal 16) überprüft wird und nicht der tatsächlich fließende Strom Is in der Stromschleife 20. Ändert nämlich der Gesamtwiderstand 133 seinen Wert, so ändert sich auch der Schleifenstrom Is in der Stromschleife 20, ohne dass dies von der Kontrolleinheit 11 bemerkt würde, denn der Erwartungswert der Rücklesespannung $U_{16}$ würde ja weiterhin mit der Vorgabespannung $U_{15}$ übereinstimmen! In diesem Fall würde der Strom Is in der Stromschleife 20 nicht mehr die gemessene Größe 02 repräsentieren, was im Extremfall zu erheblichen materiellen und personellen Schäden führen kann.

Ein zentraler Bestandteil der vorliegenden Erfindung ist daher die Aufteilung des Messwiderstandes 133 in mindestens 2 Einzelwiderstände (hier 133a und 133b) und der Abgriff des Rücklesesignals 16 zwischen diesen Einzelwiderständen! Ändert jetzt einer der Einzelwiderstände (133a oder 133b) seinen Wert (z.B. durch Bruch oder schlechte Kontaktstellen), so kann dies von der Kontrolleinheit festgestellt werden, da nun die erwartete Rücklesespannung $U_{16}$ nicht mehr zu der Vorgabespannung $U_{15}$ passt. Die erwartete Rücklesespannung $U_{16}$ berechnet sich dabei wie folgt:

$$U_{16} = (U_{15} * R_{133b}) / (R_{133a} + R_{133b})$$

Wobei $R_{133a}$ und $R_{133b}$ die nicht unbedingt gleichen Widerstandswerte der einzelnen Messwiderstände 133a und 133b sind, die beide ebenfalls nicht unbedingt vom gleichen Typ sein müssen(z. B. ein Dünnschicht- und ein Drahtwiderstand). Die Aufteilung des Messwiderstandes 133 führt also dazu, dass die Kontrolleinheit auch die Funktionsfähigkeit des Messwiderstandes selbst überwachen kann. Die Aufteilung des Messwiderstandes 133 in mehr als 2 Einzelwiderstände und die Rückführung von mehr als einem Rücklesesignal 16 ist ebenfalls möglich, führt aber zu keiner wesentlich besseren Erkennung von Problemen im Messwiderstand.

Nicht erkannt werden durch diese Maßnahme Änderungen und Driften, die beide Widerstände im gleichen Maß treffen (z.B. thermische Driften). Dies kann aber durch Verwendung von Präzisionswiderständen mit geringen Temperatur- und Alterungsdriften sowie durch die Verwendung von unterschiedlichen Widerstanstypen für die Einzelwiderstände auf ein unbedenkliches Maß reduziert werden.

Wird nun durch die Kontrolleinheit 11 eine zu große Abweichung des erwarteten Rücklesesignals vom tatsächlichen Rücklesesignal festgestellt, so muss die Kontrolleinheit 11 davon ausgehen dass entweder irgendwo im Pfad vom Vorgabesignal 15 über das Stellglied 131, über die Messwiderstände 133 und über das Rücklesesignal 16 ein Fehler vorhanden ist und der korrekte, der gemessenen Größe 02 entsprechende, Strom Is in der Stromschleife 20 über das Stellglied 131 nicht mehr richtig eingestellt werden kann, oder dass ein Fehler in der externen Stromschleife (z.B. zu hohe externe Widerstände wie z.B. Übergangswiderstände an korrodierten Kontakten) die korrekte Einstellung des richtigen Stroms verhindert. In diesem Fall kann wird die Kontrolleinheit 11 zunächst versuchen, den vom Anwender vorgesehenen Fehlerstrom (nach NAMUR) durch das 1. Stellglied 131 einzustellen. War dies ein Strom > 21 mA und die Einstellung war ebenfalls erfolglos, so wird die Kontrolleinheit 11 als nächstes versuchen einen Fehlerstrom von < 3,6mA einzustellen. War die Fehlerursache z.B. ein zu hoher externer Widerstand in der Stromschleife, so wird dann die Einstellung eines kleinen Fehlerstroms (Is < 3,6mA) problemlos funktionieren. Erst wenn auch dies fehlschlägt muss die Kontrolleinheit 11 von einem internen Fehler ausgehen. In diesem Fall kann sie durch Aktivieren des Steuersignals 18 das 2. Stellglied 132 zur Abgabe eines Fehlerstroms aktivieren. Dieses ist so konfiguriert, dass es auf jeden Fall einen festen Schleifenstrom Is > 21 mA in der Stromschleife 20 fließen lässt und damit den nachgeschalteten Auswertesystemen den Ausfall des Transmitters signalisiert.

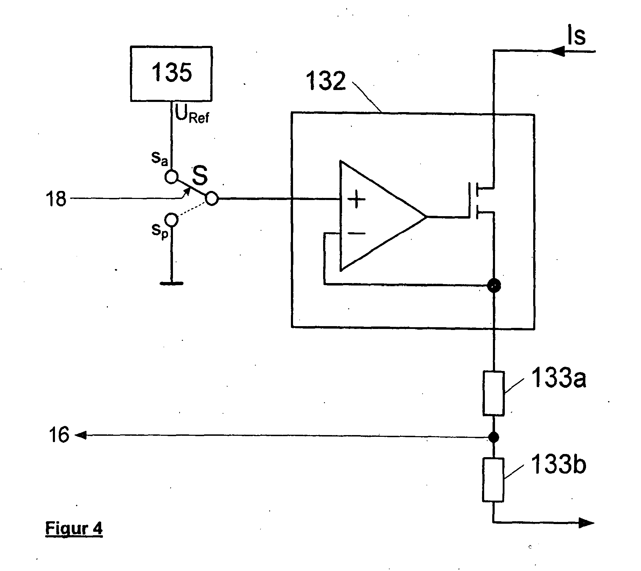

In Figur 4 wird dargestellt, wie das 2. Stellglied 132 durch das Signal 18 in einen festen Fehlerstrom geschaltet werden kann. Das Signal 18 schaltet dabei einen Schalter S zwischen den Positionen $S_a$ und $S_p$ um. Ist das Signal 18 aktiv, so steht der Schalter S in der Position $S_a$ und an das Stellglied 132 wird eine von einer Spannungsquelle generierte Spannung $U_{Ref}$ angelegt, die genau so dimensioniert ist, dass $U_{ref}$ = Is x $(R_{133a} + R_{133b})$ ist, wobei Is dem gewünschten Fehlerstrom (z.B. Is = 24mA) entspricht. Ist das Signal 18 passiv, so steht der Schalter S in der Position $S_p$ und an das Stellglied 132 wird eine Spannung angelegt, die keinen oder nur einen sehr geringen Strom Is (« 3,6mA) fließen lässt.

In einer vorteilhaften Ausführung kann der Wert des Fehlerstroms des 2. Stellgliedes mit z. B. 24mA so gewählt werden, dass dieser sich von dem "Hochstrom"-Wert des ersten Stellgliedes mit z. B. 22 mA unterscheidet. Dies kann unter Umständen bei der Fehlersuche nützlich sein.

Eine weitere Voraussetzung dafür, dass der über das Signal 16 zurückgelesene Stromwert dem tatsächlichen Schleifenstrom Is in der Stromschleife 20 entspricht, ist, dass der gesamte Strom Is der Stromschleife 20 auch vollständig durch die Messwiderstände 133 fließt. Bei 2Leiter-Geräten lässt sich dies einfach dadurch erreichen, dass entweder die gesamte Elektronik des Gerätes potentialfrei (bzw. Erdfrei) aufgebaut wird, oder dass die Versorgung der Stromschleife sowie die Stromeingangsschaltungen der Auswertesysteme potentialfrei sind.

Damit bei 3Leiter- und 4Leiter-Geräten auch im Fehlerfall keine Leckströme über die Hilfsversorgung abfließen bzw. eingespeist werden können und da-mit den über das Signal 16 zurückgelesenen Stromwert Is der

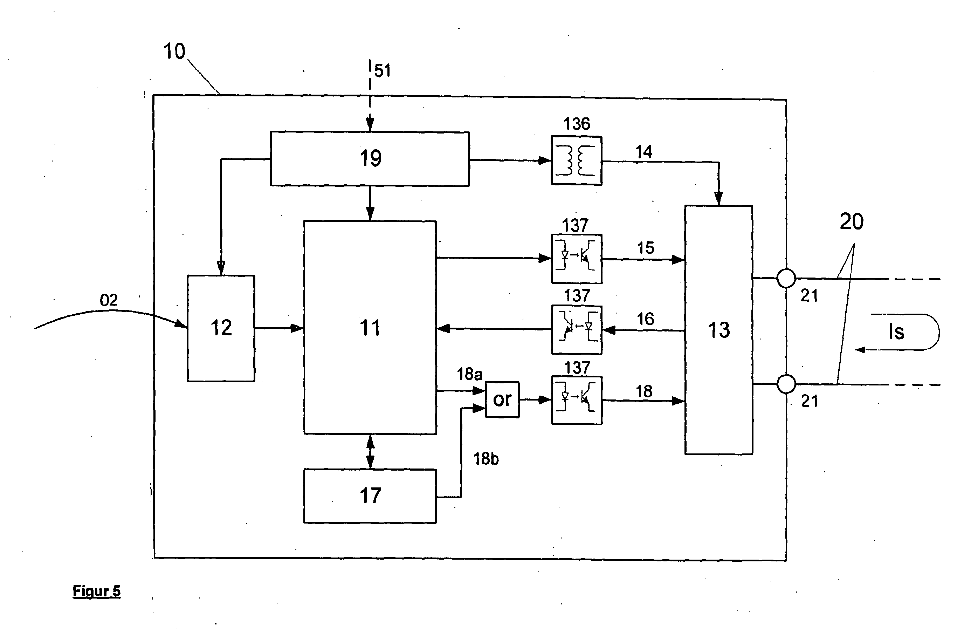

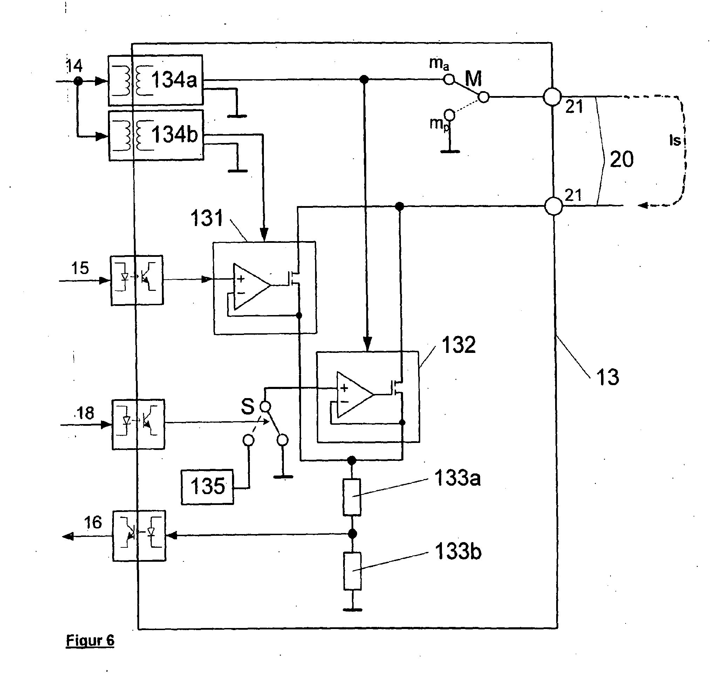

Stromschleife verfälschen, ist bei diesen Geräten eine vollständige Potentialtrennung des Stromausgangs von der restlichen Elektronik erforderlich. Für die Versorgung (Signal 14) kann dies durch geeignete DC/DC-Wandler 136 geschehen, für die Steuersignale 15, 16 und 18 zum Beispiel durch eine geeignete Optokopplerschaltungen 137 (Figur 5). Die Optokoppler 137 der Signale können mehrfach vorhanden sein. So reicht zum Beispiel für die Übertragung des analogen Vorgabewertes 15 ein hinreichend linearer Optokoppler aus. Statt des analogen Vorgabewertes lassen sich aber auch die digitalen Steuersignale eines DA-Wandlers über Optokoppler übertragen. In diesem Fall sind in der Regel mehrere Optokoppler erforderlich. Vorteil dabei ist, dass die Übertragung nicht von der Linearität der Optokoppler abhängt. Auch der Einsatz mehrerer DC/DC-Wandler ist vorteilhaft. So lassen sich z.B. die beiden Stellglieder 131 und 132 und deren Ansteuerschaltungen unabhängig voneinander aus verschiedenen DC/DC-Wandlern versorgen, so dass auch bei Ausfall eines Stellgliedes mit dessen Versorgungsspannung die Funktion des anderen Stellgliedes gewährleistet bleibt. Dies ist schematisch in Figur 6 dargestellt. Ebenfalls in Figur 6 schematisch dargestellt ist die Realisierung der Umschaltung des Stromausgangs 13 zwischen der Betriebsart als passive Stromsenke und der Betriebsart als aktive Stromquelle. Steht der Schalter (oder Steckbrücke) M in der Position $m_a$, so arbeitet der Stromausgang 13 als aktive Stromquelle. Die Versorgung der Stromschleife 20 sowie des 2. Stellgliedes 132 erfolgt dabei aus dem DC/DC-Wandler 134a. Das erste Stellglied 131 sowie die restliche Schaltung des Stromausgangs werden vom DC/DC-Wandler 134b versorgt. Steht der Schalter M in Position mp, so wird nur das 2. Stellglied 132 vom DC/DC-Wandler 134a versorgt. Die Stromschleife 20 benötigt dann eine externe Spannungsquelle zur korrekten Funktion. Dabei ist zu beachten, dass der Stromfluss in der Schleife immer in der gleichen Richtung erfolgt.

Fällt z.B. die Versorgung über den DC/DC-Wandler 134b aus, so wird dies die Kontrolleinheit 11 durch Vergleich der Vorgabewerte 15 und -Rücklesewerte 16 erkennen und kann dann über das Signal 18 das 2. Stellglied 132 aktivieren, das zusammen mit der Stromschleife 20 und seinen zugehörigen Optokopplern aus dem noch funktionierenden DC/DC-Wandler 134a versorgt wird. Fällt andererseits der DC/DC-Wandler 134a aus, so kann die Kontrolleinheit 11 über das 1. Stellglied 131 auf jeden Fall einen Fehlerstrom < 3,6mA in der Stromschleife 20 einstellen. Eine Fehlersignalisierung ist also in jedem Fall gewährleistet.

Zur Realisierung einer eigensicheren Stromschleife sind noch weitere Maßnahmen erforderlich. Es muss unter allen Umständen sichergestellt werden, das die explosionstechnischen Grenzwerte für Spannung, Strom und Leistung in der Stromschleife 20 eingehalten werden (Normenreihe EN 60079, insbesondere Teil 11). Die dafür erforderliche Strom- und Spannungsbegrenzung wird üblicherweise durch sog. Zenerbarrieren verwirklicht.

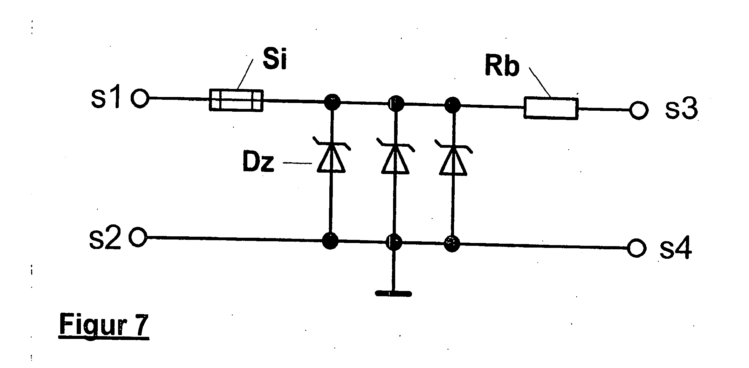

Figur 7 zeigt schematisch eine solche Zenerbarriere. Dabei wird ein nicht eigensicherer Stromkreis an die Klemmen s1 und s2 angeschlossen. Die Zenerdioden Dz begrenzen die Spannung zwischen den Klemmen s3 und s4 auf ihre Zenerspannungen Uz und der Widerstand Rb begrenzt den Strom Is im Stromkreis auf Is = Uz / Rb. Die Sicherung Si ist notwendig, um die Zenerdioden Dz vor Überlastung zu schützen (nach Norm dürfen die Zenerdioden nur bis zu maximal 2/3 Ihrer Grenzwerte ausgelastet werden). Für den Widerstand ist ein Typ mit Fehlerausschluss vorzusehen, der nicht zu kleineren Widerstandswerten hin ausfallen kann (z.B. Dünnschicht-Metallfilmwiderstand oder Drahtwiderstand mit Abwickelschutz). Die Zenerdioden müssen für Schaltkreise nach Schutzniveau ib (siehe Norm) doppelt und für Schaltkreise nach Schutzniveau ia dreifach vorhanden sein.

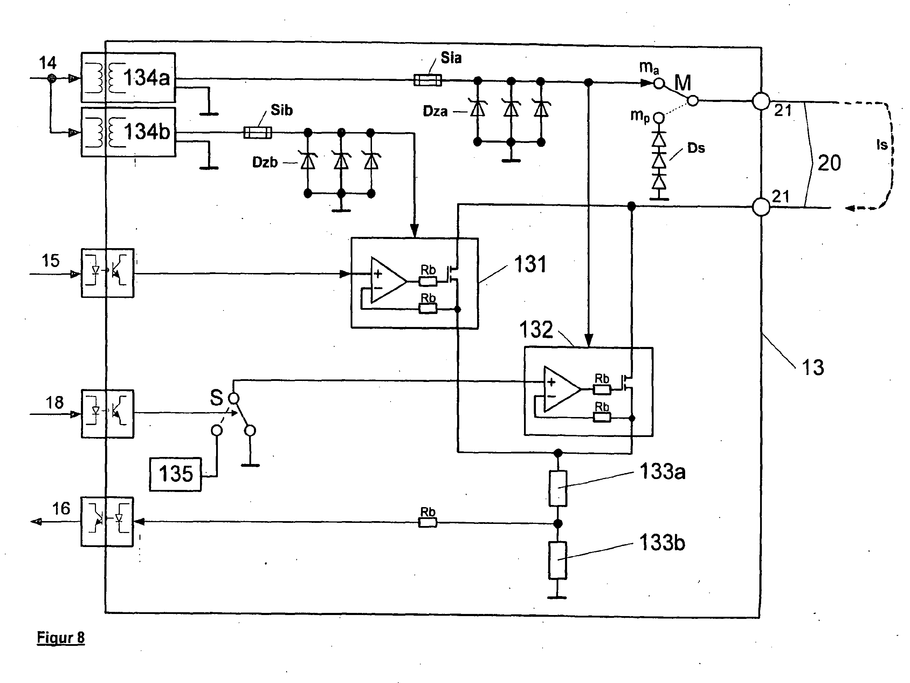

Figur 8 zeigt die Integration der Explosionsschutzmaßnahmen nach Figur 7 in den Stromausgang nach Figur 6. Die Spannungen der beiden DC/DC-Wandler 134a und 134b werden durch jeweils eigene Zenerbarrieren (Sia, Dza und Sib, Dzb) auf nicht notwendigerweise gleiche Werte begrenzt. Explosionsschutztechnisch ist die höhere der beiden Spannungen zu berücksichtigen. Sinnvollerweise wird dies die Spannung des DC/DC-Wandlers 134a sein. Ein wesentliches Merkmal der vorliegenden Erfindung ist, dass die beiden Widerstände 133a und 133b nicht nur zur Messung des Stroms in der Stromschleife dienen, sondern gleichzeitig als Strombegrenzungswiderstände (Rb in Figur 7) dienen. Sie müssen dementsprechend so ausgelegt werden, dass sie beide Funktionen erfüllen. Die zusätzlichen Widerstände Rb in den Stellgliedern sowie im Rücklesesignal 16 müssen genügend hochohmig sein, so dass der zusätzliche Stromeintrag in die Stromschleife im Fehlerfall gering bleibt. Wählt man die Operationsverstärker und Transistoren (FETs) in den spannungsgesteuerten Stromquellen 131 und 132 geeignet (mit Eingangswiderständen im Gigaohm-Bereich) so sind hier Widerstandswerte von mehreren 100 Kiloohm möglich. Die Sperrdioden Ds verhindern in der Betriebsart passive Stromsenke, dass bei einem verpolten Anschluss der externen Stromschleife die im Fehlerfall über die Widerstände Rb eingespeisten Ströme sich zu den externen Strömen addieren und zu berücksichtigen sind, da diese aufgrund der Sperrdioden nicht im äußeren Stromkreis fließen können! Auch die Sperrdioden Ds müssen für das Schutzniveau ib doppelt und für das Schutzniveau ia dreifach vorhanden sein.

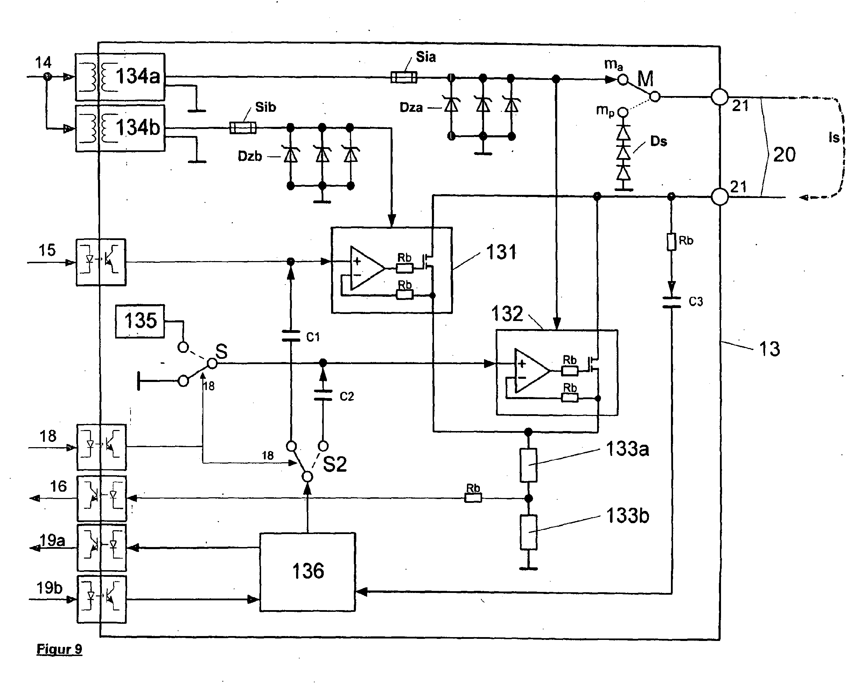

Schließlich zeigt Figur 9 noch die Integration der HART-Kommunikation in den Stromausgang 13. Eine HART-Modem-Schaltung 136 (z.B. smar HC2012 mit zugehöriger Beschaltung) dient dazu, die dem analogen, niederfrequenten (Grenzfrequenz 25Hz) Stromsignal überlagerten FSK-Signale zu empfangen bzw. zu überlagern. Die dem Stromsignal überlagerten FSK-Signale werden dabei dem Modem über einen hochohmigen (100 Kiloohm) Strombegrenzungswiderstand Rb und einem Auskoppelkondensator C3 zugeführt und vom Modem als digitales Signal 19a der Kontrolleinheit 11 zur Auswertung weitergeleitet (Empfangspfad). Die von der Kontrolleinheit 11 kommenden Sendesignale 19b werden vom Modem in FSK-Signale konvertiert und über einen weiteren vom Signal 18 gesteuerten Schalter S2 über die Kondensatoren C1 und C2 entweder auf das erste Stellglied 131 oder auf das zweit Stellglied 132 geschaltet und dort dem quasistationären Steuersignal überlagert. Durch die Umschaltung des HART-Sendesignals auf das jeweils aktive Stellglied wird erreicht, dass auch bei Aktivierung des 2. Stellglieds 132 noch eine HART-Kommunikation möglich ist und damit Diagnoseinformationen des Transmitters zugänglich sind.

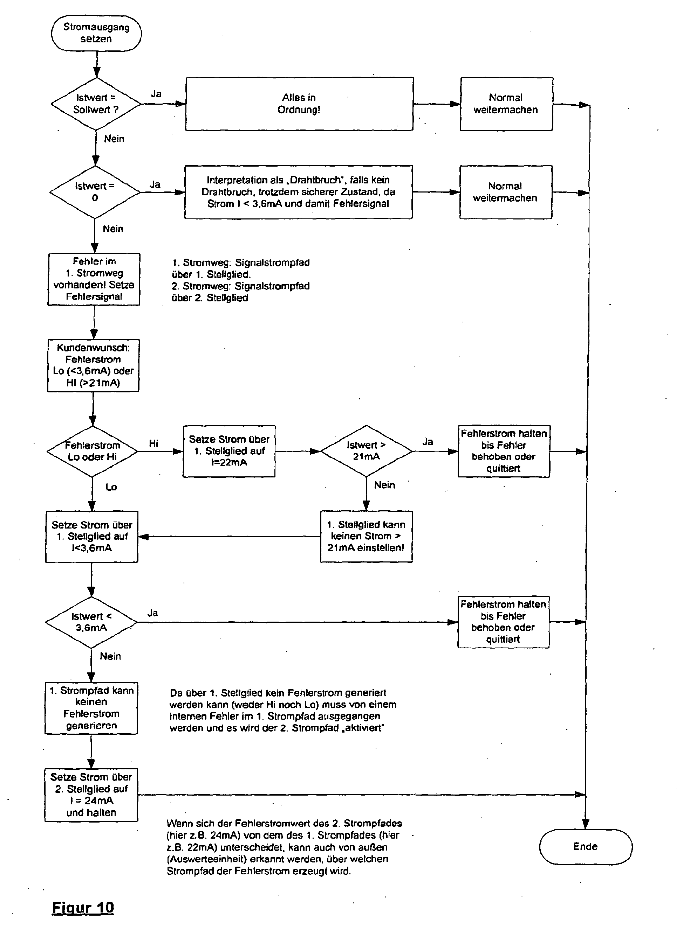

Figur 10 zeigt einen schematischen Ablauf, der sicherstellt, dass im Falle eines Fehlers immer ein der NAMUR-Empfehlung NE043 entsprechender Fehlerstrom in der Stromschleife fliesst.

**Patentansprüche**

1. Schaltung zur sicheren Übermittlung einer physikalischen oder technik schen Grösse zwischen mindestens zwei in Verbindung stehenden Systemen, die durch den Wert eines Schleifenstroms (Is) repräsentiert wird, der von einer Kontrolleinheit (11) durch eine Stromausgangsschaltung (13) in einer Stromschleife (20,60) eingestellt wird, **dadurch gekennzeichnet, dass** die Stromausgangsschaltung (13) mindestens zwei parallel geschaltete, von der Kontrollschaltung (11) steuerbare Stellglieder (131,132) als Stromquellen zur voneinander unabhängigen Einstellung eines Wertes des Schleifenstroms (Is) aufweist, dass die Stellglieder (131,132) in Reihe zu mindestens zwei ebenfalls in Reihe geschalteten Messwiderständen (133a,133b) liegen, dass die über mindestens einem der mindestens zwei Messwiderstände, nicht aber über allen, abfallende, dem Schleifenstrom (Is) proportionale Spannung an die Kontrolleinheit (11) zurück gekoppelt wird, die den Wert dieser Spannung mit dem entsprechenden, zumindest einem der Stellgliedern vorgegebenen Wert des Schleifenstroms vergleicht und bei Abweichungen über einer vorgebbaren Schwelle dem Schleifenstrom über das erste Stellglied (131) und im Falle des Ausfalls des ersten Stellglieds (131) über das zweite Stellglied (132) einen der NAMUR-Empfehlung NE043 entsprechenden Fehlerwert zuweist, und dass eine Überwachungsschaltung (17) vorgesehen ist, die bei Ausfall der Kontrolleinheit (11) dem Schleifenstrom über das zweite Stellglied (132) einen ebenfalls der NAMUR-Empfehlung NE043 entsprechenden Fehlerwert zuweist.

2. Schaltung nach Anspruch 1, **dadurch gekennzeichnet, dass** zur Kommunikation der Fehlerursache in nachfolgenden Schaltungen die im Fehlerfall dem Schleifenstrom (Is) zugewiesenen, der NAMUR-Norm entsprechenden Fehlerwerte für jedes Stellglied verschieden sind.

3. Schaltung nach Anspruch 1, **dadurch gekennzeichnet, dass** jedes Stellglied (131,132) über eine eigene interne Spannungsversorgung (134a,134b) verfügt.

4. Schaltung nach Anspruch 1, **dadurch gekennzeichnet, dass** über einen Umschalter (M) die Spannungsversorgung der Stromschleife zwischen einer internen Spannungsquelle (134a,134b) zum Betrieb der Stromausgangsschaltung (13) als aktive Stromquelle und einer externen Spannungsquelle zum Betrieb als passive Stromsenke umschaltbar ist.

5. Schaltung nach Anspruch 4, **dadurch gekennzeichnet, dass** alle intern erzeugten Spannungen (Spannungsquellen 134a,134b) durch jeweils eigene Zenerbarrieren (Sia,Dza;Sib,Dzb) auf jeweils einen Grenzwert begrenzt werden, und dass zusätzliche, hochohmige Widerstände (Rb) in den Stellgliedern (131,132) vorgesehen sind, die zusammen mit den mindestens zwei Messwiderständen (133a, 133b) als Strombegrenzungswiderstand dienen, und bei denen drei in Reihe geschaltete Dioden (Ds) eine Stromaddition der internen und externen Spannungsquellen verhindern.

6. Schaltung nach Anspruch 1, **dadurch gekennzeichnet, dass** eine HART-Modem-Schaltung (136) mit der Stromausgangsschaltung (13) verbunden ist, deren Ausgangssignal auf das jeweils aktive der beiden Stellglieder (131,132) geschaltet wird.

**Claims**

1. Circuit for the secure transmission of a physical or technical quantity between at least two connected systems, which is represented through the value of a loop current (Is), which is set by a control unit (11) through a current output circuit (13) in a current loop (20, 60), **characterised in that** the current output circuit (13) has at least two actuators (131, 132) which are connected in parallel and can be controlled by the control circuit (11), as current sources for independently setting a value of the loop current (Is), that the actuators (131, 132) are in series with at least two measuring resistors (133a, 133b) also connected in series, that the voltage falling across at least one of the at least two measuring resistors, but not across all of the latter, and which is proportional to the loop current (Is) is connected back to the control unit (11), which compares the value of this voltage with the corresponding loop current value already given to at least one of the actuators and, if there are differences over a predefinable threshold, assigns an error value corresponding to NAMUR Recommendation NE043 to the loop current via the first actuator (131), and in the case of the failure of the first actuator (131), via the second actuator (132), and that a monitoring circuit (17) is provided, which, in the case of failure of the control unit (11), assigns an error value also corresponding to NAMUR Recommendation NE043 to the loop current via the second actuator (132).

2. Circuit according to Claim 1, **characterised in that**, to communicate the error cause in subsequent circuits, the error values assigned in the case of error to the loop current (Is) and corresponding to the NAMUR Standard are different for each actuator.

3. Circuit according to Claim 1, **characterised in that** each actuator (131, 132) has its own internal voltage supply (134a, 134b).

4. Circuit according to Claim 1, **characterised in that** the voltage supply of the current loop can be switched, via a switch (M), between an internal voltage source (134a,134b) for operating the current output circuit (13) as an active current source and an external voltage source for operating as a passive current sink.

5. Circuit according to Claim 4, **characterised in that** all internally generated voltages (voltage sources 134a, 134b) are limited through their respective own Zener barriers (Sia, Dza; Sib, Dzb) to a limit value respectively, and that additional high-resistance resistors (Rb) are provided in the actuators (131, 132), which act as current-limiting resistor together with the at least two measuring resistors (133a, 133b), and wherein three diodes (Ds) connected in series impede a current addition of the internal and external voltage sources.

6. Circuit according to Claim 1, **characterised in that** a HART modem circuit (136) is connected with the current output circuit (13), the output signal of which is switched to the actuator of the two actuators (131, 132) that is active at the time.

**Revendications**

1. Circuit pour sécuriser la transmission d'une grandeur physique ou technique entre au moins deux systèmes communiquant entre eux, qui est représentée par la valeur d'un courant de boucle (Is) produit dans une boucle de courant (20, 60) par une unité de contrôle (11) à l'aide d'un circuit de sortie de courant (13), **caractérisé en ce que** le circuit de sortie de courant (13) présente au moins deux éléments de commande (131, 132) montés en parallèle, commandables par le circuit de contrôle (11) en tant que sources de courant pour assurer entre eux un réglage indépendant d'une valeur du courant de boucle (Is), **en ce que** les unités de commande (131, 132) sont montées en série avec au moins deux résistances calibrées (133a, 133b) elles aussi montées en série, **en ce que** la tension proportionnelle au courant de boucle (Is) existant aux bornes d'au moins l'une, mais non pas toutes, des au moins une résistances calibrées est connectée en retour à l'unité de contrôle (11), laquelle compare la valeur de cette tension avec la valeur correspondante prédéterminée pour au moins une des unités de commande et, en cas de différences supérieures à un seuil prédéterminé, assigne au courant de boucle une valeur d'erreur correspondant à la recommandation NAMUR NE043 à travers la première unité de commande (131) et en cas de défaillance de la première unité de commande (131) à travers la deuxième unité de commande (132), et **en ce qu'**il est prévu un circuit de surveillance (17) qui, en cas de défaillance de l'unité de contrôle (11), assigne au courant de boucle une valeur d'erreur correspondant aussi à la recommandation NAMUR NE043 à travers la deuxième unité de commande (132).

2. Circuit selon la revendication 1, **caractérisé en ce que** des valeurs d'erreur varient pour chaque unité de commande selon la norme NAMUR pour la communication de la cause d'erreur aux circuits successifs pour lesquels le courant de boucle (Is) est assigné en situation d'erreur.

3. Circuit selon la revendication 1, **caractérisé en ce que** chaque unité de commande (131, 132) dispose de sa propre alimentation interne en tension (134a, 134b).

4. Circuit selon la revendication 1, **caractérisé en ce que** l'alimentation en tension de la boucle de courant peut être commutée par un commutateur (M) entre une source interne de tension (134a, 134b) pour l'utilisation du circuit de sortie de courant (13) en tant que source de courant active et une source externe de tension pour l'utilisation en tant que baisse de courant passive.

5. Circuit selon la revendication 4, **caractérisé en ce que** toutes les tensions produites en interne (sources de tension 134a, 134b) sont limitées chacune à sa valeur limite par sa propre barrière Zener (Sia, Dza ; Sib, Dzb), et **en ce que** des résistances à haute valeur ohmique (Rb) sont en outre prévues dans les unités de commande (131, 132) pour servir de résistance de limite de courant avec les au moins deux résistances calibrées (133a, 133b), et pour lesquelles l'addition des courants des sources de tension internes et externes est empêchée par trois diodes (Ds) montées en série.

6. Circuit selon la revendication 1, **caractérisé en ce qu'**un commutateur modem HART (136) est connecté au circuit de sortie de courant (13), dont le signal de sortie est commuté sur celle des deux unités de commande (131, 132) qui est active.

Figur 1

Figur 2

Figur 3

**Figur 4**

Figur 5

Figur 6

**Figur 7**

**Figur 8**

EP 1 860 513 B1

**Figur 9**

**Figur 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1122625 A

- WO 2005052881 A2